# EUROPÄISCHE PATENTSCHRIFT

(11) **EP 1 918 226 B1**
(45) Veröffentlichungstag und Bekanntmachung des Hinweises auf die Patenterteilung: **01.07.2009**
(21) Anmeldenummer: 07019429.5
(22) Anmeldetag: 04.10.2007
(51) Int. Cl.: B65G 47/08, B65G 47/29, B65G 47/88

(54) **Vorrichtung zum Gruppieren oder Vereinzeln von quaderförmigen Artikeln**
Device for grouping or singulating rectangular articles
Dispositif de groupement ou de séparation d'articles carrés

(30) Priorität: 31.10.2006 DE 102006051863
(43) Veröffentlichungstag der Anmeldung: 07.05.2008
(73) Patentinhaber: KRONES AG, 93073 Neutraubling (DE)
(72) Erfinder: Fischer, Manfred, 85354 Freising (DE)

(56) Entgegenhaltungen:
- EP-A- 0 663 356
- JP-A- 60 262 725

## Beschreibung

Die Erfindung betrifft eine Vorrichtung zum Gruppieren oder Vereinzeln von quaderförmigen Artikeln entsprechend dem Oberbegriff des Anspruchs 1.

Vorrichtungen dieser Art werden im Zulaufbereich von Verpackungsmaschinen benötigt, die beispielsweise Getränkeflaschen in Kartons oder Flaschenkästen einsetzen. Die zur Aufnahme der Getränkeflaschen vorgesehenen quaderförmigen Transportbehälter werden in der Regel in einer geschlossenen, d.h. lückenlosen Reihe ohne Zwischenabstände zugeführt. Die in Förderrichtung sowie die in Gegenrichtung weisenden planparallelen Seitenflächen der quaderförmigen Transportbehälter berühren einander unmittelbar. Unabhängig davon, ob die zu versorgende Verpackungsmaschine taktweise oder kontinuierlich arbeitet, müssen die der Maschine zulaufenden Behälter in Transportrichtung entweder einzeln oder zumindest gruppenweise auf definierte Abstände gebracht werden.

Dazu sind beispielsweise von unten in die Transportbahn gesteuert einführbare Trennrollen, Stößel oder dgl. bekannt, die mit einem der Behälter an seiner Unterseite in Eingriff gelangen und diesen um ein bestimmtes Maß von der Förderebene weg nach oben anheben. Auf diese Weise wird eine Lücke geschaffen, um entweder mit der Rückseite des voraus laufenden Behälters oder der Vorderseite des nachlaufenden Behälters in Eingriff zu gelangen, so dass ein voraus laufender Behälter beschleunigt bzw. ein nachfolgender Behälter abgebremst werden kann, wodurch eine Vereinzelung oder Gruppierung von Behältern durch eine Abstandsvergrößerung in Transportrichtung herbeiführbar ist. Im weiteren Verlauf werden die Trennrollen oder Stößel aus der Transportbahn nach unten in eine Außereingriffposition zurückgezogen. Ungünstigerweise führt dieser bekannte Einteil- bzw. Gruppiermechanismus zu einer Beunruhigung des Behälterzulaufs, verursacht eine nicht unerhebliche Lärmentwicklung und beansprucht die Behälter bzw. Artikel, so dass Beschädigungen an diesen auftreten können.

Aus dem Stand der Technik sind noch weitere Vorrichtungen bekannt, die gemeinsam das Merkmal aufweisen, dass zum Vereinzeln oder Gruppieren von quaderförmigen Artikeln eine zur Transportebene senkrechte Hubbewegung der Gegenstände ausgeführt wird (DE 25 40 985 A1, DE 28 50 456 A1, DE 39 38 548 A1, DE 41 14 475 A1). Eine Vorrichtung zum Vereinzeln von Artikeln gemäß dem Oberbegriff des Anspruchs 1 ist bereits aus der EP-A-0 663 356 bekannt.

Dem gegenüber liegt der Erfindung die Aufgabe zugrunde, eine laufruhige und lärmarme Vorrichtung zum Gruppieren oder Vereinzeln von quaderförmigen Artikeln anzugeben.

Diese Aufgabe wird durch die Merkmale des Anspruchs 1 gelöst.

Durch seitliches Versetzen eines quaderförmigen Artikels während seiner Vorwärtsbewegung wird eine längs zur Transportbahn weisende Fläche am nachfolgenden Artikel freigelegt, an der das zum Einteilen dienende Element der Vorrichtung zur Anlage gebracht werden kann. Wenn dieses Element mit geringerer Geschwindigkeit bewegt wird als der die Artikel tragende Transporteur, kann sich der vorauslaufende Artikel von dem nachdrängenden, aber gebremsten lückenlosen Artikelstrom ablösen, wodurch ein definierbarer Zwischenabstand entsteht. Alternativ kann die Erzeugung der gewünschten Zwischenabstände auch durch eine gegenüber der Geschwindigkeit des Artikelförderers erhöhte Geschwindigkeit des Elements herbeigeführt werden, das in diesem Fall dann mit dem zum seitlich versetzten Artikel vorauslaufenden Artikel in Eingriff gelangt und diesen relativ zum Artikelförderer und dem nachlaufenden Artikelstrom beschleunigt.

Es wäre denkbar, für die seitliche Verlagerung der Artikel im Gruppier- oder Vereinzelungsbereich eine geeignete, beispielsweise seitlich an den Artikeln angreifende Einrichtung wie Exzenternocken oder dgl. vorzusehen und zum Abbremsen oder Beschleunigen der Artikel zum Zwecke der Abstandserzeugung separate, bevorzugt von unten in die Transportbahn bewegbare Elemente einzusetzen. Besonders günstig ist jedoch eine Ausgestaltung, die beide Funktionen mit nur einem Element ausführt.

Gemäß einer bevorzugten Ausführung sind die verwendeten Elemente so ausgestaltet, dass sie von unten an den Artikeln angreifend beide Funktionen ausüben. Diese Ausgestaltung erlaubt vorteilhafterweise eine schmale Bauform, so dass auch eine mehrbahnige Ausführung problemlos realisierbar ist. Die Elemente können bevorzugt keilförmig gestaltet und im Bereich nahe einer Seite der Transportbahn angeordnet sein. Wird das keilförmige Elemente mit seiner zur vertikalen Einführrichtung geneigten Keilfläche von unten mit einer Seitenkante am Boden eines Artikels zur Anlage gebracht, setzt eine quer zur Transportbahn gerichtete Abdrängbewegung des beaufschlagten Artikels ein. Um eine Anlagefläche für ein Element an der zur Transportrichtung weisenden Fläche des benachbarten Artikels freizulegen, genügt ein nur geringer seitlicher Versatz.

Um einem zunächst beidseitig zwischen Leitelementen zugeführten Artikel die seitliche Verlagerung zu ermöglichen, ist an der dem Element gegenüberliegenden Seite der Transportbahn ein Freiraum vorgesehen, der nachfolgend in Transportrichtung wieder abnimmt, um nach dem Abteilen eines oder mehrerer Artikel die beim Abteilvorgang seitlich verlagerten Artikel wieder in fluchtende Ausrichtung zu den anderen nicht versetzten Artikeln zurückzuverlagern, d.h. zunächst ausgelenkte Artikel kehren in ihre ursprüngliche seitliche Ausgangslage auf dem Transportpfad zurück. Dieses Wiedereinführen erfolgt durch ein entsprechend ausgestaltetes Leitelement, wie beispielsweise ein schräg zur Transportrichtung angestelltes Geländer, einen Riemen oder andere geeignete Einrichtungen.

Zur Erleichterung bzw. Unterstützung der seitlichen Verlagerung der Artikel beim Gruppieren oder Vereinzeln, aber auch beim nachfolgenden Wiedereinführen auf den ursprünglichen Transportpfad, kann die Transportebene der Artikel in den jeweiligen Funktionsbereichen quer zur Transportrichtung zur jeweils gewünschten Querbewegungsrichtung der Artikel geneigt ausgerichtet sein, um mit dem wirksamen Hangabtrieb eine gleitende Bewegung auszulösen bzw. zu unterstützen.

Weitere vorteilhafte Ausgestaltungen sind Gegenstand der verbleibenden Unteransprüche.

Im Anschluss wird ein bevorzugtes Ausführungsbeispiels in Verbindung mit den Figuren erläutert. Es zeigt:
- Fig. 1: eine Gruppiereinrichtung in einer schematischen Draufsicht in drei aufeinander folgenden Betriebsphasen,
- Fig. 2: die Gruppiereinrichtung der Fig. 1 in schematischen Seitenansichten der drei Betriebsphasen und
- Fig. 3: drei Stellungen eines Elements zum seitlichen Verlagern eines Artikels, jeweils in Transportrichtung des Artikels gesehen dargestellt.

Das in den Figuren dargestellte Ausführungsbeispiel zeigt eine Gruppiereinrichtung G für Kartons 1 oder dgl. quaderförmige Artikel, die im vorliegenden Fall jeweils in Dreiergruppen 1a vom vorlaufenden Ende eines lückenlos herangeführten Kartonstromes 1c abteilt und auf einen definierten, für eine nicht gezeigte, nachgeordnete, z.B. zum Einsetzen von Flaschen in die Kartons dienende Verpackungsmaschine eingestellten Teilungsabstand bringt, der der Längensumme einer Dreiergruppe 1a und dem Abstand zur nachfolgenden Dreiergruppe entspricht.

Die Kartons werden auf einem Förderer 2 stehend reibschlüssig transportiert, der mit seiner Oberseite eine horizontale Transportebene E bildet. Der Förderer kann durch jedes geeignete Fördermittel gebildet werden, z.B. Matten- oder Scharnierbandketten. In Transportrichtung T mit Zwischenabstand parallel verlaufend sind entlang beider Seiten Geländerführungen 4, 4' angeordnet, die eine kanalartige Transportbahn B bzw. einen Transportpfad für die Kartons bestimmen, die/der im Bereich der Gruppiereinrichtung G eine sich quer zur Transportbahn einseitig abstandsvergrößernde Geländerausbuchtung aufweist, wodurch ein seitlicher Freiraum F besteht.

Die in einer einspurigen, fluchtenden Reihe vorzugsweise kontinuierlich zulaufenden, sich gegenseitig flächig berührenden Kartons können von der Gruppiereinrichtung G während dem Gruppier- oder ggf. Vereinzelungsvorgang seitlich in diesen Freiraum zunächst verlagert und im Anschluss wieder in die ursprüngliche fluchtende Ausrichtung eingegliedert bzw. zurückverlagert werden. Der Verlauf der linksseitigen Geländerführung 4 weist eine zunächst schlagartige Erweiterung 4.1 oder Öffnung auf, die danach durch einen schrägen Geländerabschnitt 4.2 in einem verhältnismäßig flachen Winkel in die ursprüngliche Längsrichtung zurückgeführt wird und dann im Weiteren wieder mit gleichem Abstand wie zuvor parallel zu der sich durchgehend gerade erstreckenden rechtsseitigen Geländerführung 4' verläuft.

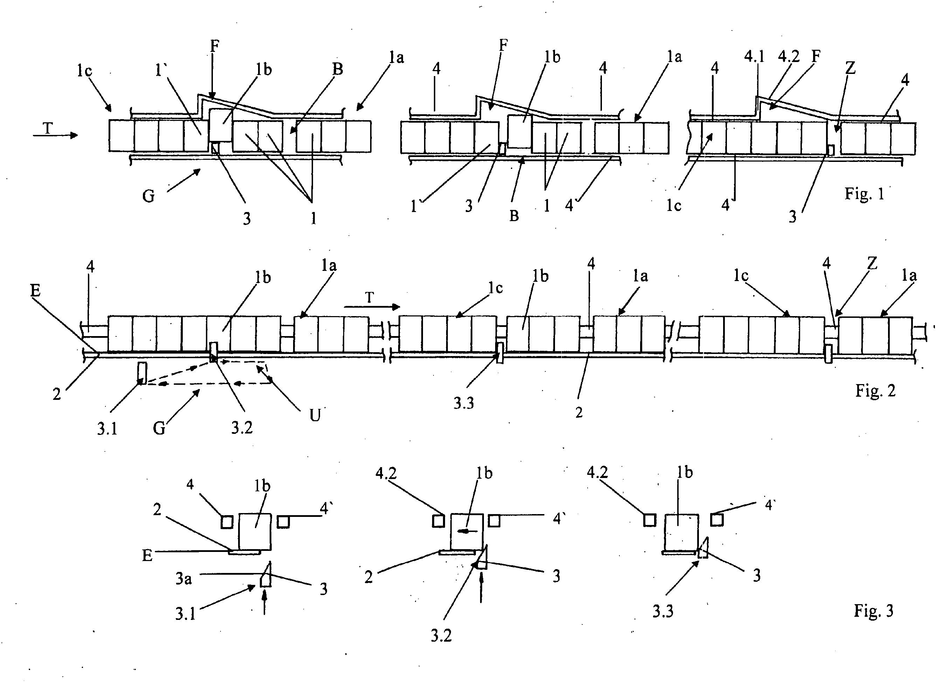

Die Gruppiereinrichtung G weist wenigstens ein sowohl längs zur Transportrichtung T unterhalb der Transportebene E entlang der geschlossenen Bahnkurve U (Fig.2 linke Darstellung) gesteuert vor- und zurückbewegbares Element 3 auf, das zudem auch im Wesentlichen senkrecht zur Transportebene E gesteuert derart auf- und abbewegbar ist, dass es streckenweise die Transportebene von unten durchgreifen kann und dabei zeitweise in die Transportbahn B der Kartons ragt. Der Antrieb und die gesteuerte Betätigung des wenigstens einen Elements 3 kann durch ein nicht gezeigtes kartesisches Achsensystem, bestehend aus senkrecht aufeinander stehenden Linearachsen (Horizontal- und Vertikalachse), gebildet werden, die beispielsweise durch eine frei programmierbare Steuerung beliebige Bahnkurven U mit ebenfalls beliebigen Geschwindigkeitsprofilen erzeugen können. Ein derartiges System ist aus DE 10 2004 042 474 A1 hinreichend bekannt. Der Offenbarungsgehalt dieses Dokuments wird ausdrücklich vollumfänglich einbezogen. Wie dort ausführlich erläutert, können solche Systeme problemlos mehr als nur ein Element 3 aufweisen, z.B. zwei unabhängig bewegbare Elemente, deren Bewegungsabläufe aber so aufeinander abgestimmt sind, dass ein funktionell harmonisches Zusammenwirken zum Gruppieren oder Vereinzeln von Artikeln sichergestellt ist. Alternativ können auch mechanische Steuersysteme, die beispielsweise mit Steuerkurven und/oder Hebelgetrieben die erforderlichen Bahnkurven erzeugen, verwendet werden, die allerdings weniger flexibel in Bezug auf die Erzeugung und eine ggf. erforderliche Umstellung verschiedener Bahnkurven und Geschwindigkeitsprofile sind.

Das wenigstens eine Element 3 besitzt eine zur Transportebene E geneigte Steuerfläche 3a und hat dadurch eine insgesamt gesehen keilförmige Gestalt. Seine Bewegungspfad ist außermittig zur Transportbahn B nahe zur rechtsseitigen Geländerführung 4' versetzt, wobei die Steuerfläche 3a an der zur linksseitigen Geländerführung 4, zum Freiraum F weisenden Seite des Elements 3 angeformt ist.

Das Element 3 ist unterhalb der Transportebene E in Transportrichtung T synchron zur Bewegung des zunächst noch lückenlos zulaufenden Kartonstromes 1c mitführbar (Position 3.1 in Fig.3), wobei auf Höhe des Freiraums F die Spitze des Elements 3 die Transportebene E durch eine gleichzeitige Vertikalbewegung nach oben durchstößt. Die zur Transportebene E geneigte Steuerfläche 3a des Elements 3 gelangt dabei von unten im Bereich der rechten, längs laufenden Bodenseitenkante nahe der rechten Seitenfläche eines Kartons mit diesem in Eingriff (Position 3.2 in Fig.3), die seitlich über den rechten Rand des Förderers 2 teilweise frei übersteht, und verlagert dadurch den Karton 1b quer zur Transportrichtung T in den Freiraum F hinein, ohne die Transportebene E zu verlassen, d.h. die Bodenfläche des Kartons 1b verbleibt während des geschilderten Vorgangs in der Transportebene E.

Durch das sanfte zur Seite Schieben eines Kartons 1b wird die in Transportrichtung T voraus laufende Vorderseite des nachfolgenden Kartons 1' freigelegt (Fig.1, linke Darstellung) und gelangt infolge einer wenigstens vorübergehend längs zur Transportrichtung T geringeren Laufgeschwindigkeit des Elements 3 als die Laufgeschwindigkeit des Förderers 2 mit diesem Karton 1' in Anlage, wobei der nachdrängende Karton 1' vom langsamer laufenden Element 3 relativ zum Förderer 2 gebremst wird, während der vorher zur Seite verlagerte, ungebremst voraus laufende Karton 1b sich mit erhöhter Geschwindigkeit, nämlich der Geschwindigkeit des Förderers 2 entfernt und dadurch ein von der Geschwindigkeitsdifferenz zum Förderer 2 und der Eingriffsdauer des Elements 3 abhängiger Zwischenabstand Z in Transportrichtung T entsteht. Bei Erreichen des gewünschten Teilungsabstands wird das Element 3 unverzüglich nach unten außer Eingriff gebracht und für den nächsten Arbeitstakt entgegen der Transportrichtung T unterhalb der Transportebene E stromauf zurückgeführt.

Beim Gruppieren zunächst seitlich in den Freiraum F verlagerte Kartons 1b werden durch die längsgerichtete Transportbewegung in Verbindung mit dem unter einem spitzen Winkel zur Transportrichtung T verlaufenden Geländerführungsabschnitt 4.2 wieder in die ursprüngliche Transportbahn B seitlich eingegliedert, so dass in Transportrichtung T fluchtende Kartongruppen 1a entstehen. Dies können beispielsweise Dreiergruppen sein. Die Anzahl der Kartons pro abgetrennter Gruppe ist ebenso wie der Teilungsabstand über die Steuerung der Gruppiereinrichtung G einstellbar bzw. wird von dieser bestimmt.

Mit der beschriebenen Vorrichtung ist ein artikelschonender, laufruhiger und geräuscharmer Gruppier- oder Vereinzelungsvorgang bei lückenlos zulaufenden Artikelströmen realisierbar.

## Patentansprüche

1. Vorrichtung (G) zum Gruppieren oder Vereinzeln von quaderförmigen Artikeln (1), die in wenigstens einer geschlossenen Reihe (1c) auf einen Förderer (2) in einer Transportebene (E) transportiert und zum Weiterbehandeln einzeln oder gruppenweise beabstandet werden, **dadurch gekennzeichnet, dass** parallel zur Transportrichtung (T) wenigstens ein Element (3) so in die Transportbahn (B) der Artikel einführbar ist, dass ein Artikel (1b) während seiner Vorwärtsbewegung längs zur Transportrichtung (T) von dem Element (3) wenigstens geringfügig seitlich in der Transportebene (E) verlagert wird, und das Element (3) für einen benachbarten Artikel (1') eine längs zur Transportbahn (B) wirksame Anlagefläche bildet.

2. Vorrichtung nach Anspruch 1, **dadurch gekennzeichnet, dass** das Element (3) im Wesentlichen senkrecht zur Transportebene (E) in die Transportbahn (B) der Artikel (1, 1b, 1c) einführbar ist, insbesondere von unten.

3. Vorrichtung nach Anspruch 2, **dadurch gekennzeichnet, dass** das Element (3) außermittig nahe einer der längs zur Transportrichtung (T) verlaufenden Seitenflächen eines Artikels (1b) angreift.

4. Vorrichtung nach wenigstens einem der Ansprüche 1 bis 3, **dadurch gekennzeichnet, dass** das Element (3) keilförmig ausgebildet ist und wenigstens eine zur Transportebene (E) geneigte Führungsfläche (3a) aufweist, die mit einem Artikel (1b) zu dessen seitlicher Verlagerung in Eingriff bringbar ist.

5. Vorrichtung nach wenigstens einem der vorhergehenden Ansprüche, **dadurch gekennzeichnet, dass** die Artikel mit ihrer Bodenfläche auf dem Förderer (2) stehend reibschlüssig kontinuierlich transportiert werden, und dass wenigstens eine Element (3) durch ein eigenes Bewegungsmittel zumindest zeitweise mit wenigstens geringfügig von der Geschwindigkeit des Förderers (2) abweichende Geschwindigkeit längs zur Transportrichtung (T) der Artikel mitführbar ist.

6. Vorrichtung nach wenigstens einem der vorhergehenden Ansprüche, **dadurch gekennzeichnet, dass** die Artikel auf dem Förderer (2) durch Geländer (4, 4') seitlich geführt dem Eingriffsbereich (G) des wenigstens einen Elements (3) zugeführt werden und dort quer zur Transportrichtung (T) ein Freiraum (F) vorgesehen ist, in den Artikel (1b) seitlich verlagerbar sind.

7. Vorrichtung nach Anspruch 6, **dadurch gekennzeichnet, dass** vom Freiraum (F) im Eingriffsbereich (G) des wenigstens einen Elements (3) weg beginnend eine Leiteinrichtung (4.2) zum Zurückverlagern eines seitlich versetzten Artikels (1b) in seine wenigstens annähernd ursprüngliche Ausrichtung relativ zur Transportbahn (B) vorgesehen ist.

8. Vorrichtung nach wenigstens einem der Ansprüche 1 bis 7, **dadurch gekennzeichnet, dass** die Transportebene (E) quer zur Transportbahn (B) in Verlagerungsrichtung von Artikeln (1b) geneigt ist, zumindest im Bereich eines Freiraumes (F), in den Artikel (1b) verlagerbar sind.

## Claims

1. Apparatus (G) for arranging right parallelipiped articles (1) into groups or separating them into singles, being articles that are conveyed contiguously in at least one row (1c) on a conveyor (2) in a conveying plane (E) and are then spaced apart in singles or groups for further handling, **characterised in that** at least one member (3), parallel to the conveying direction (T), can be inserted into the conveying track (B) of the articles, such that an article (1b), during its forward movement longitudinally in the conveying direction (T), can be displaced laterally in the conveying plane (E) by the member (3), at least slightly, and the member (3) forms an effective abutment surface, lengthwise of the conveying track (B), for a neighbouring article (1').

2. Apparatus according to claim 1, **characterised in that** the member (3) can be inserted into the conveying track (B) of the articles (1, 1b, 1c) essentially perpendicularly with respect to the conveying plane (E), especially from below.

3. Apparatus according to claim 2, **characterised in that** the member (3) engages offset from and near one of the side surfaces of an article (1b) that extends longitudinally with respect to the conveying direction (T).

4. Apparatus according to at least one of claims 1 to 3, **characterised in that** the member (3) is formed wedge shaped and has at least one guide surface (3a), inclined with respect to the conveying plane (E), which can be brought into engagement with an article (1b) for lateral displacement of the latter.

5. Apparatus according to at least one of the preceding claims, **characterised in that** the articles are conveyed, continuously, standing with their underside in frictional engagement on the conveyor (2), and that at least one member (3), via its own movement means, can move along longitudinally in the conveying direction (T) of the articles at a speed which at least part of the time differs at least slightly from the speed of the conveyor (2).

6. Apparatus according to at least one of the preceding claims, **characterised in that** the articles on the conveyor (2) are fed, guided laterally by railings (4, 4'), to the engagement region (G) of the at least one member (3), and there a free space (F) is provided transversely with respect to the conveying direction (T), into which articles (1b) can be displaced laterally.

7. Apparatus according to claim 6, **characterised in that** a guide device (4.2) is provided, beginning from the free space (F) in the engagement region (G) of the at least one member (3), for displacing back a laterally displaced article (1b) at least approximately back to its original alignment relative to the conveying track (B).

8. Apparatus according to at least one of claims 1 to 7, **characterised in that** the conveying plane (E) is inclined relatively to the conveying track (B), transversely with respect to the displacement direction of the articles (1b), at least in the region of a free space (F) into which articles (1b) can be displaced.

## Revendications

1. Dispositif (G) pour grouper ou séparer des articles (1) de forme parallélépipédique, transportés suivant au moins une rangée serrée (1c) sur un convoyeur (2) dans un plan de transport (E) et pour poursuivre le traitement, séparément ou par groupe, écarté
**caractérisé en ce qu'**
en parallèle à la direction de transport (T), au moins un élément (3) peut être introduit dans le trajet de transport (B) des articles,
un article (1b) peut être légèrement déplacé latéralement dans le plan de transport (E) au cours de son mouvement d'avancée le long de la direction de transport (T) par l'élément (3), et
l'élément (3) forme une surface d'appui active le long du chemin de transport (B) pour un article voisin (1').

2. Dispositif selon la revendication 1,
**caractérisé en ce que**
l'élément (3) est introduit pratiquement perpendiculairement au plan de transport (E) dans le chemin de transport (B) des articles (1, 1b, 1c) et notamment il est introduit par en dessous.

3. Dispositif selon la revendication 2,
**caractérisé en ce que**
l'élément (3) attaque de façon excentrée un article (1b), circulant le long de la direction de transport (T) à proximité d'une surface latérale.

4. Dispositif selon au moins l'une des revendications 1 à 3,
**caractérisé en ce que**
l'élément (3) est en forme de coin et présente au moins une surface de guidage (3a) inclinée par rapport au plan de transport (E), cette surface pouvant être mise en prise avec un article (1b) pour assurer son décalage latéral.

5. Dispositif selon au moins l'une des revendications précédentes,
**caractérisé en ce que**
les articles reposant debout, par leur fond sur le convoyeur (2), sont transportés en continu par une liaison par friction et au moins un élément (3) est entraîné par un moyen de déplacement propre, au moins de temps en temps à une vitesse au moins légèrement inférieure à la vitesse du convoyeur (2) le long de la direction de transport (T) des articles.

6. Dispositif selon au moins l'une des revendications précédentes,
**caractérisé en ce que**
les articles sont guidés sur le convoyeur (2), latéralement par des barrières (4, 4') pour arriver dans la zone de prise (G) d'au moins un élément (3) et à cet endroit transversalement à la direction de transport (T) il y a un espace libre (F) dans lequel les articles (1b) peuvent être décalés latéralement.

7. Dispositif selon la revendication 6,
**caractérisé en ce que**
une installation de guidage (4.2) qui a commencé à s'écarter, à partir de l'espace libre (F) dans la zone de prise (G) d'au moins un élément (3), replace un article (1b) décalé latéralement pour le ramener dans son alignement au moins partiellement d'origine par rapport au chemin de transport (B).

8. Dispositif selon au moins l'une des revendications 1 à 7,
**caractérisé en ce que**
le plan de transport (E) est incliné par rapport au chemin de transport (B) dans le sens du déplacement des articles (1b), au moins au niveau d'un espace libre (F) dans lequel les articles (1b) peuvent être déplacés.
